# EUROPEAN PATENT APPLICATION

(11) **EP 4 826 946 A1**
(43) Date of publication of application: **21.10.2026**
(21) Application number: 25893747.3
(22) Date of filing: 16.09.2025
(51) Int. Cl.: H02J 3/38, H02J 3/28, H02J 3/48, H02J 3/00

(54) **POWER DISTRIBUTION METHOD AND APPARATUS FOR PHOTOVOLTAIC ENERGY STORAGE SYSTEM, COMPUTER DEVICE, STORAGE MEDIUM, AND PROGRAM PRODUCT**

(30) Priority: 20.11.2024 CN 202411671420
(71) Applicant: National Institute of Guangdong Advanced Energy Storage Co., Ltd., Guangzhou, Guangdong 510080 (CN)
(72) Inventor: SHI, Zhengjun, Guangzhou, Guangdong 510080 (CN); ZHANG, Xiaoyin, Guangzhou, Guangdong 510080 (CN); YANG, Yi, Guangzhou, Guangdong 510080 (CN); HUANG, Zheng, Guangzhou, Guangdong 510080 (CN); WU, Wei, Guangzhou, Guangdong 510080 (CN); LIU, Shi, Guangzhou, Guangdong 510080 (CN)
(74) Representative: Murgitroyd & Company
(86) International application number: PCT/CN2025/121505
(87) International publication number: WO 2026/108364

(57) **Abstract**

The present application relates to a power distribution method and apparatus for a photovoltaic energy storage system, computer device, storage medium, and program product. The method first determines an initial filtering step size and a filtering step size increment. Then historical photovoltaic active power values before a target time period and predicted photovoltaic active power values after the target time period is obtained on the basis of the filtering step size. Determining a current energy storage power value for the target time period based on the historical photovoltaic active power values and the predicted photovoltaic active power values. If the current energy storage power value does not exceed preset energy storage operation boundary conditions, updating the filtering step size on the basis of the filtering step size increment, and re-obtaining historical photovoltaic active power values and predicted photovoltaic active power values on the basis of the new filtering step size, until the determined current energy storage power value exceeds the energy storage operation boundary conditions, and ending the cycle to obtain a target energy storage power value for the target time period.

## Description

### TECHNICAL FIELD

The present application relates to the technical field of new energy, in particular to a power distribution method and apparatus for photovoltaic energy storage system, computer device, storage medium, and program product.

### BACKGROUND

In today's power systems, vigorously developing new energy sources such as photovoltaic power is an effective way to achieve sustainable energy development and the "dual carbon" goals. However, influenced by weather factors, photovoltaic power generation is characterized by intermittency, randomness and uncertainty, which adversely affects the safe and stable operation of the power system. Therefore, it is of great significance to smooth photovoltaic power fluctuations to reduce impacts on the power grid. Energy storage equipment is capable of spatio-temporal transfer and flexible scheduling of electric energy, and deploying energy storage equipment on the photovoltaic power station side is a feasible solution to mitigate photovoltaic fluctuations.

For energy storage scheduling strategies for smoothing photovoltaic fluctuations, existing power distribution methods mainly include the first-order low-pass filtering method, the Moving Average Filtering (MAF) method, Empirical Mode Decomposition (EMD), etc. In engineering practice, an original photovoltaic power data for the current time period cannot be obtained in advance, and the energy storage smoothing power can only be calculated based on historical photovoltaic data.

However, existing power distribution methods overlook the target power lag resulting from historical data usage, which greatly increases the stress on the energy storage system when photovoltaic power fluctuates rapidly.

### SUMMARY

In a first aspect, the present application provides a power distribution method for a photovoltaic energy storage system. The method includes:
determining an initial filtering step size and a filtering step size increment for each iteration;
obtaining historical photovoltaic active power values before a target time period and predicted photovoltaic active power values after the target time period on the basis of the filtering step size, wherein the target time period is a time period during which photovoltaic fluctuation smoothing is performed;
determining a current energy storage power value for the target time period based on the historical photovoltaic active power values and the predicted photovoltaic active power values; and
if the current energy storage power value does not exceed preset energy storage operation boundary conditions, updating the filtering step size based on the filtering step size increment to obtain a new filtering step size, returning to the step of obtain historical photovoltaic active power values before a target time period and predicted photovoltaic active power values after the target time period on the basis of the filtering step size, until the determined current energy storage power value exceeds the energy storage operation boundary conditions, and ending the cycle to obtain a target energy storage power value for the target time period.

In an embodiment, obtaining historical photovoltaic active power values before a target time period and predicted photovoltaic active power values after the target time period on the basis of the filtering step size includes:
determining, according to the filtering step size, a first number of historical photovoltaic active power values to be acquired and a second number of predicted photovoltaic active power values to be acquired, wherein a sum of the first number and the second number is equal to the filtering step size; and
obtaining the first number of photovoltaic active power values that are before and closest to the target time period as the historical photovoltaic active power values, and predicting the second number of photovoltaic active power values that are after and closest to the target time period as the predicted photovoltaic active power values.

In an embodiment, determining a current energy storage power value for the target time period based on the historical photovoltaic active power values and the predicted photovoltaic active power values includes:
determining a current value of a smoothed photovoltaic grid-connected power for the target time period based on the historical photovoltaic active power values and the predicted photovoltaic active power values ; and
obtaining an original photovoltaic power value for the target time period, and obtaining the current energy storage power value for the target time period according to the current value of a smoothed photovoltaic grid-connected power for the target time period and the original photovoltaic power value.

In an embodiment, the historical photovoltaic active power values and the predicted photovoltaic active power values each comprise a plurality of values.
determining a current value of a smoothed photovoltaic grid-connected power for the target time period based on the historical photovoltaic active power values and the predicted photovoltaic active power values includes:
summing all of the plurality of the historical photovoltaic active power values and the predicted photovoltaic active power values to obtain a total power value; and
obtaining a ratio of the total power to the filtering step size as the current value of smoothed photovoltaic grid-connected power.

In an embodiment, obtaining the current energy storage power value for the target time period according to the current value of a smoothed photovoltaic grid-connected power for the target time period and the original photovoltaic power value includes:
calculating a difference between the current value of smoothed photovoltaic grid-connected power and the original photovoltaic power value to obtain the current energy storage power value for the target time period.

In an embodiment, the energy storage operation boundary conditions include an energy storage state-of-charge constraint condition and an energy storage power constraint condition. The energy storage state-of-charge constraint condition is that the energy storage state-of-charge for a time period subsequent to the target time period is within a first preset range. The energy storage power constraint condition is that the energy storage power for the target time period is within a second preset range.

In a second aspect, the present application further provides a power distribution apparatus for a photovoltaic energy storage system. The apparatus includes:
an initial determination module, configured to determine an initial filtering step size and a filtering step size increment for each iteration;
a power obtainment module, configured to obtain historical photovoltaic active power values before a target time period and predicted photovoltaic active power values after the target time period on the basis of the filtering step size, wherein the target time period is a time period during which photovoltaic fluctuation smoothing is performed;
an energy storage determination module, configured to determine a current energy storage power value for the target time period based on the historical photovoltaic active power values and the predicted photovoltaic active power values; and
a target determination module, configured to update the filtering step size based on the filtering step size increment to obtain a new filtering step size if the current energy storage power value does not exceed preset energy storage operation boundary conditions, return to the step of obtain historical photovoltaic active power values before a target time period and predicted photovoltaic active power values after the target time period on the basis of the filtering step size, until the determined current energy storage power value exceeds the energy storage operation boundary conditions, and end the cycle to obtain a target energy storage power value for the target time period.

In a third aspect, the present application further provides a computer device. The computer device includes a memory and a processor, the memory stores a computer program, and the processor implements the steps of the power distribution method for a photovoltaic energy storage system according to any one of the first aspect when executing the computer program.

In a fourth aspect, the present application further provides a computer-readable storage medium having stored thereon a computer program, which implements the steps of the power distribution method for a photovoltaic energy storage system according to any one of the first aspect when executed by a processor.

In a fifth aspect, the present application further provides a computer program product comprising a computer program, which implements the steps of the power distribution method for a photovoltaic energy storage system according to any one of the first aspect when executed by a processor.

The above power distribution method and apparatus for a photovoltaic energy storage system, computer device, storage medium and computer program product are based on the moving average filtering method: determining an initial filtering step size and a filtering step size increment for each iteration; obtaining historical photovoltaic active power values before a target time period for photovoltaic fluctuation smoothing and predicted photovoltaic active power values after the target time period on the basis of the filtering step size; determining a current energy storage power value for the target time period based on the historical photovoltaic active power values and the predicted photovoltaic active power values. If the current energy storage power value does not exceed preset energy storage operation boundary conditions, updating the filtering step size based on the filtering step size increment to obtain a new filtering step size, returning to the step of obtain historical photovoltaic active power values before a target time period and predicted photovoltaic active power values after the target time period on the basis of the filtering step size, until the determined current energy storage power value exceeds the energy storage operation boundary conditions, ending the cycle to obtain a target energy storage power value for the target time period. The method avoids the lag of the photovoltaic grid-connected target power curve by combining historical photovoltaic power data and short-term predicted power data. Further, taking into account the stochastic characteristics of photovoltaic, the method performs real-time checks to determine if the energy storage power exceeds its operational boundaries and iteratively adjusts the filtering step size online. Thereby, it maximizes the utilization of the storage's peak-shaving potential for photovoltaic systems with varying fluctuation patterns, reduces stress on the storage system, and achieves an adaptive adjustment effect based on different fluctuation conditions.

### BRIEF DESCRIPTION OF THE DRAWINGS

FIG. 1 is a schematic flowchart of a power distribution method for a photovoltaic energy storage system according to an embodiment.
FIG. 2 is a structural topology diagram of a photovoltaic energy storage system according to an embodiment.
FIG. 3 is a schematic flowchart of power distribution method for of a photovoltaic energy storage system according to another embodiment.
FIG. 4 is a schematic diagram of photovoltaic grid-connected power curves before and after smoothing according to an embodiment.
FIG. 5 is a schematic diagram of a power curve of an energy storage system according to an embodiment.
FIG. 6 is a structural block diagram of a power distribution apparatus for a photovoltaic energy storage system according to an embodiment.
FIG. 7 is an internal structure diagram of a computer device according to an embodiment.

### DETAILED DESCRIPTION OF THE EMBODIMENTS

In order to make the objectives, technical solutions and advantages of the present application clearer, the present application will be described in further detail below with reference to the accompanying drawings and embodiments. It should be understood that the specific embodiments described herein are merely intended to explain the present application and are not intended to limit the present application.

It should be noted that the terms "first", "second" and the like in the description and claims of the present application and in the above drawings are used for distinguishing similar objects and not necessarily for describing a specific order or sequence. It is to be understood that the terms so used are interchangeable under appropriate circumstances, so that the embodiments of the present application described herein can be implemented in sequences other than those illustrated or described herein.

In related technologies, with regard to optimal energy storage scheduling strategies for smoothing photovoltaic fluctuations, existing power distribution methods mainly include the first-order low-pass filtering method, the Moving Average Filtering (MAF) method, and Empirical Mode Decomposition (EMD). In actual engineering scenarios, it is impossible to obtain original photovoltaic power data of a future moment in advance, and an energy storage smoothing power can only be calculated based on historical photovoltaic data. However, existing power distribution methods overlook the target power lag resulting from historical data usage, which greatly increases the stress on the energy storage system when photovoltaic power fluctuates rapidly. In addition, most power distribution methods do not fully consider the stochastic characteristics of photovoltaic power, and the smoothing effect cannot be adaptively adjusted according to different fluctuation conditions.

In view of this, the present application proposes an improved moving average filtering method for power distribution of a photovoltaic energy storage system. By combining historical photovoltaic power data and short-term predicted power data, the method avoids the target power lag caused by using only historical power data, and iteratively adjusts a filtering step size by judging whether an energy storage operation boundary is exceeded in real time, so as to fully exploit the peak regulation potential of energy storage.

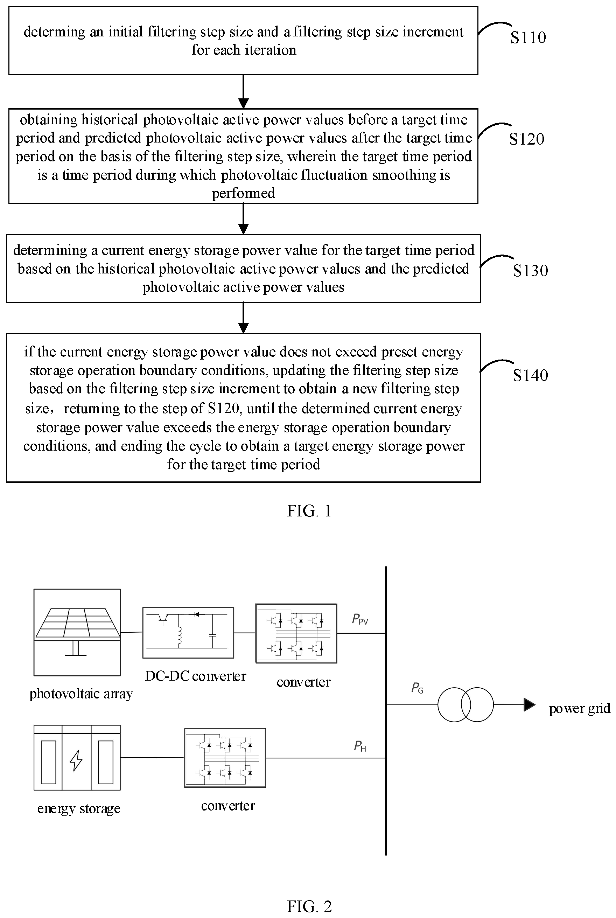

In an embodiment, as shown in FIG. 1, a power distribution method for a photovoltaic energy storage system is provided. This embodiment is exemplified by applying the method to a terminal. It can be understood that the method can also be applied to a server, and can also be applied to a system including a terminal and a server, and implemented through interaction between the terminal and the server. The terminal may include, but is not limited to, various personal computers, notebook computers, smart phones, tablet computers, Internet of Things devices and portable wearable devices. The Internet of Things devices may be smart speakers, smart televisions, smart air conditioners, smart vehicle-mounted devices, etc. The portable wearable devices may be smart watches, smart bracelets, head-mounted devices, etc. The server may be an independent server or a server cluster composed of multiple servers. In this embodiment, the method includes the following steps.

In a step S110, an initial filtering step size and a filtering step size increment for each iteration are determined.

Specifically, the present application performs power distribution of a photovoltaic energy storage system based on the moving average filtering method. The filtering step size refers to the number of power data values involved in each calculation of an average value during moving average filtering processing. The filtering step size increment refers to the filtering step size increased in each iteration cycle. Performing power distribution of a photovoltaic energy storage system based on the moving average filtering method is simple in operation and involves a low calculation amount, and real-time data can be processed quickly.

In practical applications, in addition to determining the initial filtering step size and the filtering step size increment for each iteration, an upper limit of the number of iterations may also be set to save time and resources and thus improve the power distribution efficiency of the photovoltaic energy storage system.

In a step S120, historical photovoltaic active power values before a target time period and predicted photovoltaic active power values after the target time period on the basis of the filtering step size are obtained, where the target time period is a time period during which photovoltaic fluctuation smoothing is performed.

In a specific implementation, the filtering step size represents the number of power data values involved in each calculation of an average value. Therefore, a first number of historical photovoltaic active power values and a second number of predicted photovoltaic active power values need to be determined based on the filtering step size. Then, the first number of photovoltaic active power values before the target time period are obtained as historical photovoltaic active power values, and the second number of photovoltaic active power values after the target time period are predicted as predicted photovoltaic active power values.

In a step S130, a current energy storage power value for the target time period based on the historical photovoltaic active power values and the predicted photovoltaic active power values are determined.

FIG. 2 shows a structural topology diagram of a photovoltaic energy storage system. When losses in the system are ignored, a power flow of the system has the following relationship: ${P}_{G} \left(t\right) = {P}_{PV} \left(t\right) + {P}_{H} \left(t\right)$ where P_{G}(t)represents a photovoltaic grid-connected power during the time period t, P_{PV}(t) represents an original photovoltaic power during the time period t, and P_{H}(t) represents an energy storage power during the time period t.

According to the above relationship, determining the current energy storage power value for the target time period needs to be based on the photovoltaic grid-connected power values for the target time period and the original photovoltaic power values for the target time period. In addition, to ensure the safe operation of the power system, the photovoltaic grid-connected power values is smoothed, and the smoothing of photovoltaic power is specifically realized through the design of energy storage power. Therefore, the photovoltaic grid-connected power value used to determine the current energy storage power value for the target time period is the smoothed photovoltaic grid-connected power value, wherein the smoothing method adopted is the moving average filtering method. Therefore, the historical photovoltaic active power values and predicted photovoltaic active power values acquired based on the filtering step size may be filtered to obtain a current value of smoothed photovoltaic grid-connected power. Then an original photovoltaic power for the target time period is obtained, and the current energy storage power value for the target time period is determined according to the current value of smoothed photovoltaic grid-connected power for the target time period and the original photovoltaic power value.

In a step S140, if the current energy storage power value does not exceed preset energy storage operation boundary conditions, the filtering step size is updated based on the filtering step size increment to obtain a new filtering step size. Then return to the step of obtaining historical photovoltaic active power values before a target time period and predicted photovoltaic active power values after the target time period on the basis of the filtering step size. The above cycle is repeated until the determined current energy storage power value exceeds the energy storage operation boundary conditions. Finally, the cycle is terminated and a target energy storage power value for the target period is obtained.

In a specific implementation, after obtaining the current energy storage power value for the target time period, it may be further judged whether the current energy storage power value exceeds preset energy storage operation boundary conditions. If it exceeds, the current energy storage power value is output as the target energy storage power value for the target time period to smooth photovoltaic fluctuations. If it does not exceed, the filtering step size is updated according to the filtering step size increment, that is, a new filtering step size is obtained by adding the filtering step size increment to the current filtering step size, and the process returns to the step S120. The new filtering step size is used to obtain new historical photovoltaic active power values before the target time period and new predicted photovoltaic active power values after the target time period again. Based on the new historical photovoltaic active power values and new predicted photovoltaic active power values, a new current energy storage power value for the target time period is determined, and it is judged again whether the new current energy storage power exceeds the preset energy storage operation boundary conditions. If it exceeds, the new filtering step size increment is added to the filtering step size again, and then the process returns to step S120, and so on, until the cycle end condition is reached, that is, the current energy storage power obtained in the latest iteration exceeds the energy storage operation boundary conditions, the cycle is terminated, and the current energy storage power obtained in the latest iteration is output as the target energy storage power for the target time period.

It can be understood that if an upper limit of the number of iterations is set before the start of the cycle, the cycle end conditions include not only that the current energy storage power value obtained in the latest iteration exceeds the energy storage operation boundary conditions, but also that the number of iterations reaches the preset upper limit of the number of iterations.

In the above method for power distribution of a photovoltaic energy storage system, based on the moving average filtering method, determining an initial filtering step size and a filtering step size increment for each iteration; obtaining historical photovoltaic active power values before a target time period for photovoltaic fluctuation smoothing and predicted photovoltaic active power values after the target time period on the basis of the filtering step size; determining a current energy storage power value for the target time period based on the historical photovoltaic active power values and the predicted photovoltaic active power values. If the current energy storage power value does not exceed preset energy storage operation boundary conditions, updating the filtering step size based on the filtering step size increment to obtain a new filtering step size, returning to the step of obtain historical photovoltaic active power values before a target time period and predicted photovoltaic active power values after the target time period on the basis of the filtering step size, until the determined current energy storage power value exceeds the energy storage operation boundary conditions, and ending the cycle to obtain a target energy storage power value for the target time period. The method avoids the lag of the photovoltaic grid-connected target power curve by combining historical photovoltaic power data and short-term predicted power data. Further, taking into account the stochastic characteristics of photovoltaic, the method performs real-time checks to determine if the energy storage power exceeds its operational boundaries and iteratively adjusts the filtering step size online. Thereby, it maximizes the utilization of the storage's peak-shaving potential for photovoltaic systems with varying fluctuation patterns, reduces stress on the storage system, and achieves an adaptive adjustment effect based on different fluctuation conditions.

In an exemplary embodiment, the step S120 of obtaining historical photovoltaic active power values before a target time period and predicted photovoltaic active power values after the target time period on the basis of the filtering step size specifically includes the following steps.

In a step S121, a first number of historical photovoltaic active power values to be acquired and a second number of predicted photovoltaic active power values to be acquired are determined according to the filtering step size, wherein a sum of the first number and the second number is equal to the filtering step size.

In a step S122, the first number of photovoltaic active power values that are before and closest to the target time period are obtained as the historical photovoltaic active power values. Meanwhile, the second number of photovoltaic active power values that are after and closest to the target time period are predicted and defined as the predicted photovoltaic active power values.

Specifically, the filtering step size represents the number of power data values involved in each calculation of an average value, which can be understood as a window for smoothing photovoltaic fluctuations, and the historical photovoltaic active power values and predicted photovoltaic active power values are used to calculate the photovoltaic grid-connected power within the smoothing window. Therefore, the sum of the first number of historical photovoltaic active power values and the second number of predicted photovoltaic active power values should be equal to the filtering step size. Then, the first number of photovoltaic active power values closest to the target time period before the target time period may be obtained as historical photovoltaic active power values, and the second number of photovoltaic active power values closest to the target time period after the target time period may be predicted as predicted photovoltaic active power values.

More specifically, in an embodiment, the first number and the second number may be equal, that is, both are equal to half of the filtering step size.

In this embodiment, by obtaining historical photovoltaic power data and short-term predicted power data, the two are jointly used as a calculation basis for energy storage smoothing power in the subsequent process. By equalizing the first number of historical photovoltaic active power values and the second number of predicted photovoltaic active power values, the balance between historical data and predicted data can be further realized, thereby achieving a better photovoltaic smoothing effect.

In an exemplary embodiment, the step S130 of determining a current energy storage power value for the target time period based on the historical photovoltaic active power values and predicted photovoltaic active power values specifically includes the following steps.

In a step S131, a current value of a smoothed photovoltaic grid-connected power for the target time period are determined based on the historical photovoltaic active power values and predicted photovoltaic active power values.

In a step S132, original photovoltaic power value for the target time period is obtained, and the current energy storage power value for the target time period is obtained according to the current value of a smoothed photovoltaic grid-connected power for the target time period and the original photovoltaic power value.

In a specific implementation, based on the historical active power values and predicted active power values of photovoltaic generation, the smoothed grid-connected photovoltaic power at the current moment for the target period is determined, which includes applying the moving average filtering method to average the historical active power values and predicted active power values of photovoltaic generation, so as to obtain the smoothed grid-connected photovoltaic power at the current moment within the target period. Then, after obtaining the original photovoltaic power for the target time period, the current energy storage power value for the target time period may be obtained according to the current value of smoothed photovoltaic grid-connected power for the target time period and the original photovoltaic power value.

Further, in an exemplary embodiment, the historical photovoltaic active power values and the predicted photovoltaic active power values each comprise a plurality of values. In step S131, the current value of smoothed photovoltaic grid-connected power for the target time period is determined based on the historical photovoltaic active power values and the predicted photovoltaic active power values, which includes: summing all of the plurality of the historical photovoltaic active power values and the predicted photovoltaic active power values to obtain a total power value; and obtaining a ratio of the total power to the filtering step size as the current value of smoothed photovoltaic grid-connected power.

In a specific implementation, since the total number of historical photovoltaic active power values and predicted photovoltaic active power values is equal to the filtering step size, when the historical photovoltaic active power values and the predicted photovoltaic active power values are averaged using the moving average filtering method, the historical photovoltaic active power values and the predicted photovoltaic active power values are first summed to obtain a total power value, and then the total power value is divided by the filtering step size to obtain a current value of smoothed photovoltaic grid-connected power.

For example, let the filtering step size be N, the first number of historical photovoltaic active power values and the second number of predicted photovoltaic active power values are equal, both being N/2, and the target time period is t. Then the current value of smoothed photovoltaic grid-connected power during the time period t can be expressed by the formula: ${P}_{G , K}^{′} \left(t\right) = \frac{1}{N} \left[{\sum }_{n = 1}^{N / 2} {P}_{PV} \left(t-n\right) +{\sum }_{n = 1}^{N / 2} {P}_{forecast} \left(t+n-1\right)\right]$ where ${P}_{G , k}^{′} \left(t\right)$ represents the current value of smoothed grid-connected photovoltaic power obtained at the K-th iteration during the time period t; *P_{PV}*(*t - n*) represents the historical photovoltaic active power values during the time period t-n; and *P*_{forecast}(*t + n* - 1) represents the predicted photovoltaic active power values during the time period t-n+1.

In this embodiment, by combining historical photovoltaic power data and short-term predicted power data as a calculation basis for energy storage smoothing power, thus the lag of the photovoltaic grid-connected target power curve can be avoided.

Further, in an exemplary embodiment, in step S132, the current energy storage power value for the target time period is obtained according to the current value of smoothed photovoltaic grid-connected power for the target time period and the original photovoltaic power value, which includes: calculating a difference between the current value of smoothed photovoltaic grid-connected power and the original photovoltaic power value to obtain the current energy storage power value for the target time period.

Specifically, based on FIG. 2, the relationship between energy storage power value, photovoltaic grid-connected power value r and original photovoltaic power value can be determined as: photovoltaic grid-connected power value= original photovoltaic power value + energy storage power value. Therefore, when determining the current energy storage power value for the target time period according to the current value of smoothed photovoltaic grid-connected power for the target time period and the original photovoltaic power value, the current energy storage power value for the target time period can be obtained by calculating the difference between the current value of smoothed photovoltaic grid-connected power and the original photovoltaic power value.

In this embodiment, the current energy storage power value for the target time period is obtained by calculating the difference between the current value of smoothed photovoltaic grid-connected power and the original photovoltaic power value, so as to facilitate subsequent judgment and adjustment of the current energy storage power, maximize the peak regulation potential of energy storage, and reduce the pressure on the energy storage system.

In an exemplary embodiment, the energy storage operation boundary conditions in step S140 comprise an energy storage state-of-charge constraint condition and an energy storage power constraint condition, wherein the energy storage state-of-charge constraint condition is that the energy storage state-of-charge for a time period subsequent to the target time period is within a first preset range. The energy storage power constraint condition is that the energy storage power for the target time period is within a second preset range.

Specifically, the energy storage state-of-charge (SOC) constraint can be expressed by the following relationship: $\left\{\begin{matrix}{SOC}_{min} \leq SOC \left(t+1\right) \leq {SOC}_{max} \\ SOC \left(t+1\right) = SOC \left(t\right) - \frac{{P}_{H , K}^{′} \left(t\right) \times T}{E}\end{matrix}\right.$ where *SOC*(*t*) represents the energy storage state-of-charge during the time period t, *SOCₘᵢₙ* and *SOCₘₐₓ* represent the minimum and maximum values of energy storage state-of-charge, respectively, that is, the first preset range is [*SOCₘᵢₙ* , *SOC*ₘₐₓ], E represents the maximum capacity of energy storage, and T represents the scheduling time period.

The energy storage power constraint condition can be expressed by the following relationship: ${P}_{H . min} \leq {P}_{H , K}^{′} \left(t\right) \leq {P}_{H . max}$ where *P_{H.max}* and *P_{H.min}* represent the minimum and maximum values of energy storage power, respectively, that is, the second preset range is [*P_{H.min}*, *P_{H.max}*].

In this embodiment, energy storage operation boundary conditions are set from two dimensions of energy storage state-of-charge and energy storage power, which can ensure the rationality of the finally determined target energy storage power for the target time period, realize the smoothing of photovoltaic power generation more effectively, and improve the reliability and economy of the entire power system.

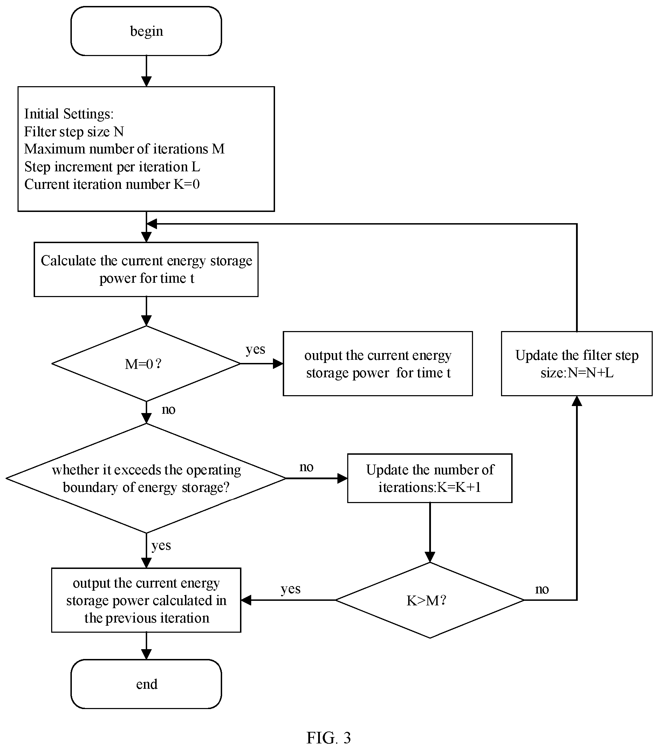

In an embodiment, for ease of understanding by those skilled in the art, the embodiments of the present application will be described below with reference to specific examples in the drawings. Referring to Fig. 3, a specific schematic flowchart of a method for power distribution of a photovoltaic energy storage system based on the moving average filtering method is shown. Assuming that photovoltaic fluctuations are smoothed by energy storage during the time period t, the specific process is as follows.
(1) An initial filtering step size N, an upper limit of the number of iterations M, and a filtering step size increment L for each iteration are set, and the current number of iterations K=0 is recorded.
(2) The smoothed photovoltaic grid-connected power at the K-th iteration during the time period t are calculated.
   Specifically, the current value of smoothed photovoltaic grid-connected power is calculated by combining historical photovoltaic active power and short-term predicted photovoltaic active power, so as to avoid the target power lag caused by relying only on historical data. The specific calculation formula is as follows: ${P}_{G , K}^{′} \left(t\right) = \frac{1}{N} \left[{\sum }_{n = 1}^{N / 2} {P}_{PV} \left(t-n\right) +{\sum }_{n = 1}^{N / 2} {P}_{forecast} \left(t+n-1\right)\right]$ where ${P}_{G , k}^{′} \left(t\right)$ represents the smoothed photovoltaic grid-connected power at the K-th iteration during the time period t, *P_{PV}*(*t - n*) represents historical photovoltaic active power during the time period t-n, and *P*_{forecast}(*t + n* -1) represents predicted photovoltaic active power during the time period t-n+1.
(3) The energy storage power value at the K-th iteration during the time period t is calculated.
   Specifically, the energy storage power can be obtained by calculating the difference between the smoothed photovoltaic grid-connected power value at the K-th iteration during the time period t and the original photovoltaic power value during the time period t, which is expressed by the formula: ${P}_{H , K}^{′} \left(t\right) = {P}_{G , K}^{′} \left(t\right) - {P}_{PV} \left(t\right)$ where ${P}_{H , K}^{′} \left(t\right)$ represents the energy storage power at the K-th iteration during the time period t, and *P_{PV}*(*t*) represents the original photovoltaic power during the time period t.
(4) If the upper limit of the number of iterations M=0, that is, only one calculation is performed, the currently calculated energy storage power can be directly stored as the target energy storage power, that is, ${P}_{H}^{′} \left(t\right) = {P}_{H , K}^{′} \left(t\right)$.
(5) If the upper limit of the number of iterations M ≠ 0, judge whether the energy storage power ${P}_{H , K}^{′} \left(t\right)$ obtained in this iteration exceeds the energy storage operation boundary conditions.

If the energy storage power does not exceed the energy storage operation boundary conditions, the iteration count is updated by executing K=K+1. It is then determined whether the updated iteration count exceeds the maximum iteration limit. If it exceeds the upper limit of the number of iterations, the latest energy storage power is output as the target energy storage power. If the limit is not exceeded, the filter step size is updated by executing N=N+L, and the process return to step (2) to recalculate the energy storage power.

If the energy storage power value exceeds the energy storage operation boundary conditions, the energy storage power calculated in the previous iteration (i.e., K-1) is output as the target energy storage power.

In the present method, power distribution of the photovoltaic energy storage system is implemented based on the moving average filtering method. Simple operations and low computational complexity are achieved, and real-time data can be processed efficiently. Further, on the basis of the moving average filtering method, historical photovoltaic power data and short-term predicted power data are combined, so that the lag problem of the target grid-connected photovoltaic power curve is avoided. In addition, the random characteristics of photovoltaic power are fully taken into account in this method. By judging in real time whether the energy storage power exceeds the operating boundary of the energy storage system, the filter step size is adjusted iteratively in real time. Thus, the peak regulation potential of the energy storage system can be maximized for photovoltaic power with different fluctuation states, and adaptive adjustment corresponding to various fluctuation conditions is realized.

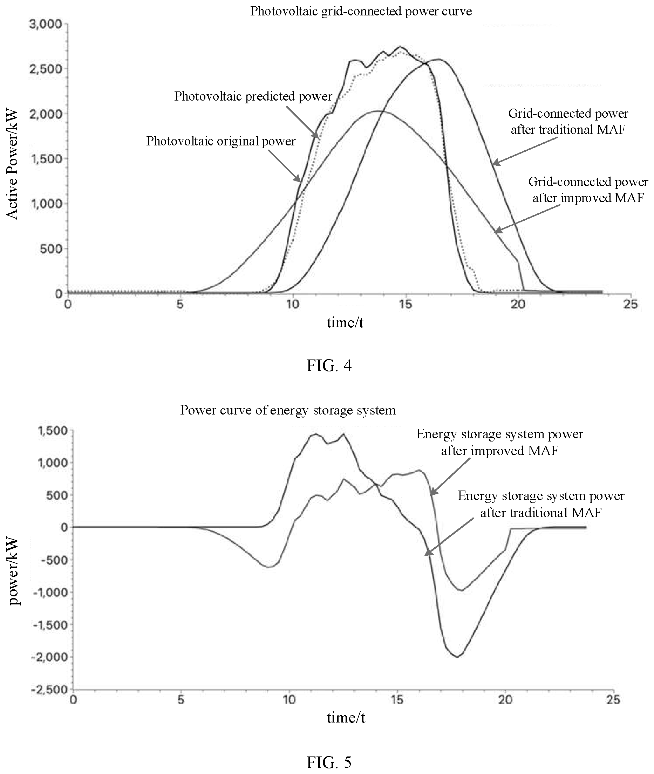

Further, tests have verified the effectiveness of the present method. Taking the operation data of a typical day of a photovoltaic power station as an example, it includes 96 output values and short-term photovoltaic prediction data, and energy storage is configured at 10% of the photovoltaic installed capacity. The photovoltaic grid-connected power curves before and after smoothing processed by the method of the present application are shown in FIG. 4. It can be seen from the figure that compared with the traditional moving average filtering method, the target power lag of photovoltaic grid-connected power after adopting the improved moving average filtering method of the present application is significantly improved. In addition, due to the real-time iterative adjustment of the filtering step size, the peak regulation potential of energy storage is deeply exploited, and the fluctuation of photovoltaic output can be smoothed more effectively compared with the traditional moving average filtering method.

In addition, FIG. 5 shows a power curve diagram of an energy storage system according to an embodiment. It can be seen that the energy storage system adopting the improved moving average filtering method of the present application has a significantly smaller power peak value and peak regulation power consumption than the traditional moving average filtering method. This is due to the significant improvement of the target power lag by the improved moving average filtering method, so that all outputs of energy storage are basically used for smoothing photovoltaic fluctuations.

It should be understood that although the steps in the flowcharts of the above embodiments are shown in sequence as indicated by arrows, these steps are not necessarily executed in the sequence indicated by the arrows. Unless explicitly stated herein, the execution of these steps is not strictly limited, and these steps may be executed in other sequences. Moreover, at least some of the steps in the flowcharts of the above embodiments may include multiple steps or stages. These steps or stages are not necessarily executed at the same time, but may be executed at different times, and the execution sequence of these steps or stages is not necessarily sequential, but may be performed alternately or alternately with at least part of other steps or steps or stages in other steps.

Based on the same inventive concept, the embodiments of the present application further provide a power distribution apparatus for a photovoltaic energy storage system for implementing the above-mentioned power distribution method for a photovoltaic energy storage system. For the implementation of the problem solved by the apparatus, reference may be made to the relevant description in the power distribution method for a photovoltaic energy storage system described above, which will not be repeated here.

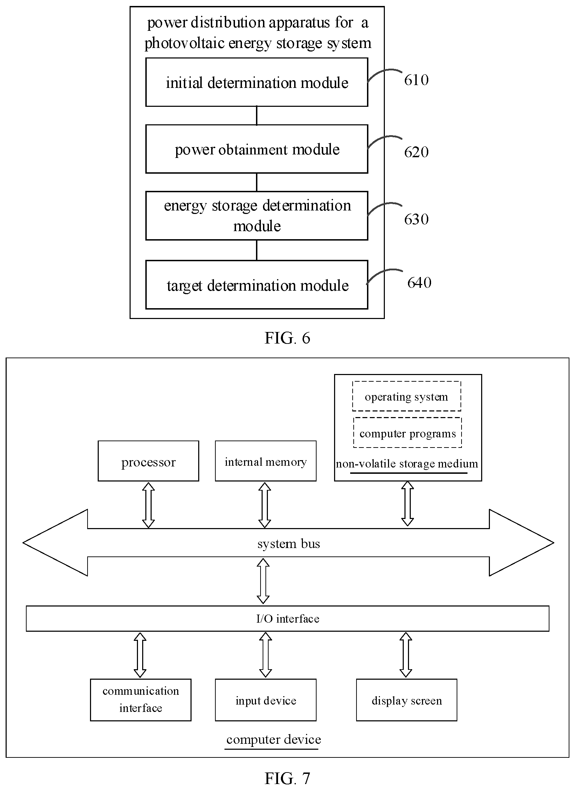

In an embodiment, as shown in FIG. 6, a power distribution apparatus for a photovoltaic energy storage system is provided, including:
an initial determination module 610, configured to determine an initial filtering step size and a filtering step size increment for each iteration;
a power obtainment module 620, configured to obtain historical photovoltaic active power values before a target time period and predicted photovoltaic active power values after the target time period on the basis of the filtering step size, wherein the target time period is a time period during which photovoltaic fluctuation smoothing is performed;
an energy storage determination module 630, configured to determine a current energy storage power value for the target time period based on the historical photovoltaic active power values and the predicted photovoltaic active power values; and
a target determination module 640, configured to update the filtering step size based on the filtering step size increment to obtain a new filtering step size if the current energy storage power value does not exceed preset energy storage operation boundary conditions, return to the step of obtain historical photovoltaic active power values before a target time period and predicted photovoltaic active power values after the target time period on the basis of the filtering step size, until the determined current energy storage power value exceeds the energy storage operation boundary conditions, and end the cycle to obtain a target energy storage power value for the target time period.

In an embodiment, the power obtainment module 620 is further configured to:
determine, according to the filtering step size, a first number of historical photovoltaic active power values to be acquired and a second number of predicted photovoltaic active power values to be acquired, wherein a sum of the first number and the second number is equal to the filtering step size; and
obtain the first number of photovoltaic active power values that are before and closest to the target time period as the historical photovoltaic active power values, and predict the second number of photovoltaic active power values that are after and closest to the target time period as the predicted photovoltaic active power values.

In an embodiment, the energy storage determination module 630 is further configured to:
determine a current value of a smoothed photovoltaic grid-connected power for the target time period based on the historical photovoltaic active power values and the predicted photovoltaic active power values; and
obtain an original photovoltaic power value for the target time period, and obtain the current energy storage power value for the target time period according to the current value of a smoothed photovoltaic grid-connected power for the target time period and the original photovoltaic power value.

In an embodiment, the historical photovoltaic active power values and the predicted photovoltaic active power values each comprise a plurality of values. The energy storage determination module 630 is further configured to:
sum all of the plurality of the historical photovoltaic active power values and the predicted photovoltaic active power values to obtain a total power value; and
obtain a ratio of the total power to the filtering step size as the current value of smoothed photovoltaic grid-connected power.

In an embodiment, the energy storage determination module 630 is further configured to calculate a difference between the current value of smoothed photovoltaic grid-connected power and the original photovoltaic power value to obtain the current energy storage power value for the target time period.

In an embodiment, the energy storage operation boundary conditions include an energy storage state-of-charge constraint condition and an energy storage power constraint condition. The energy storage state-of-charge constraint condition is that the energy storage state-of-charge for a time period subsequent to the target time period is within a first preset range. The energy storage power constraint condition is that the energy storage power for the target time period is within a second preset range.

Each module in the above apparatus for power distribution of a photovoltaic energy storage system may be implemented in whole or in part by software, hardware and combinations thereof. The above modules may be embedded in or independent of a processor in a computer device in the form of hardware, or may be stored in a memory in a computer device in the form of software, so that the processor can invoke and execute the operations corresponding to the above modules.

In an embodiment, a computer device is provided. The computer device may be a terminal, and its internal structure diagram may be as shown in FIG. 7. The computer device includes a processor, a memory, a communication interface, a display screen and an input device connected via a system bus. The processor of the computer device is used to provide calculation and control capabilities. The memory of the computer device includes a non-volatile storage medium and an internal memory. The non-volatile storage medium stores an operating system and a computer program. The internal memory provides an environment for the operation of the operating system and computer programs in the non-volatile storage medium. The communication interface of the computer device is used for wired or wireless communication with an external terminal, and the wireless mode may be implemented via WIFI, mobile cellular network, NFC (Near Field Communication) or other technologies. The computer program is executed by the processor to implement a method for power distribution of a photovoltaic energy storage system. The display screen of the computer device may be a liquid crystal display screen or an electronic ink display screen, and the input device of the computer device may be a touch layer covered on the display screen, or a button, a trackball or a touch pad arranged on a shell of the computer device, or an external keyboard, touch pad or mouse.

Those skilled in the art can understand that the structure shown in FIG. 7 is only a block diagram of a part of the structure related to the solution of the present application, and does not constitute a limitation on the computer device to which the solution of the present application is applied. A specific computer device may include more or fewer components than those shown in the figure, or combine some components, or have a different component arrangement.

In an embodiment, a computer device is further provided, including a memory and a processor, wherein a computer program is stored in the memory, and the processor implements the steps of the above method embodiments when executing the computer program.

In an embodiment, a computer-readable storage medium is provided, on which a computer program is stored, wherein the computer program implements the steps of the above method embodiments when executed by a processor.

In an embodiment, a computer program product is provided, including a computer program, wherein the computer program implements the steps of the above method embodiments when executed by a processor.

It should be noted that the user information (including but not limited to user device information, user personal information, etc.) and data (including but not limited to data for analysis, stored data, displayed data, etc.) involved in the present application are information and data authorized by the user or fully authorized by all parties, and the collection, use and processing of relevant data need to comply with relevant laws and regulations in relevant countries and regions.

Those of ordinary skill in the art can understand that all or part of the processes in the methods of the above embodiments may be completed by instructing relevant hardware through a computer program, and the computer program may be stored in a non-volatile computer-readable storage medium. When executed, the computer program may include the processes of the embodiments of the above methods. Any reference to memory, database or other media used in the embodiments provided in the present application may include at least non-volatile and volatile memory. Non-volatile memory may include read-only memory (ROM), magnetic tape, floppy disk, flash memory, optical memory, high-density embedded non-volatile memory, resistive random-access memory (ReRAM), magneto resistive random-access memory (MRAM), ferroelectric random-access memory (FRAM), phase change memory (PCM), graphene memory, etc. Volatile memory may include random-access memory (RAM) or external cache memory. By way of illustration and not limitation, RAM may be in various forms, such as static random-access memory (SRAM) or dynamic random-access memory (DRAM). The database involved in the embodiments provided in the present application may include at least one of relational database and non-relational database. The non-relational database may include a distributed database based on blockchain, etc., but is not limited thereto. The processor involved in the embodiments provided in the present application may be a general-purpose processor, a central processing unit, a graphics processor, a digital signal processor, a programmable logic device, a quantum computing-based data processing logic device, etc., but is not limited thereto.

The technical features of the above embodiments can be combined arbitrarily. For the sake of brevity, all possible combinations of the technical features in the above embodiments are not described. However, as long as there is no contradiction between the combinations of these technical features, they shall be considered as the scope recorded in this specification.

The above embodiments only express several implementation modes of the present application, and the descriptions thereof are specific and detailed, but cannot be understood as a limitation on the patent scope of the present application. It should be pointed out that for those skilled in the art, without departing from the concept of the present application, several modifications and improvements can be made, which all belong to the protection scope of the present application. Therefore, the protection scope of the present application shall be subject to the appended claims.

## Claims

1. A power distribution method for a photovoltaic energy storage system, **characterized in that** the method comprises:
determining an initial filtering step size and a filtering step size increment for each iteration;
obtaining historical photovoltaic active power values before a target time period and predicted photovoltaic active power values after the target time period on the basis of the filtering step size, wherein the target time period is a time period during which photovoltaic fluctuation smoothing is performed;
determining a current energy storage power value for the target time period based on the historical photovoltaic active power values and the predicted photovoltaic active power values; and
if the current energy storage power value does not exceed preset energy storage operation boundary conditions, updating the filtering step size based on the filtering step size increment to obtain a new filtering step size, returning to the step of obtain historical photovoltaic active power values before a target time period and predicted photovoltaic active power values after the target time period on the basis of the filtering step size, until the determined current energy storage power value exceeds the energy storage operation boundary conditions, and ending the cycle to obtain a target energy storage power value for the target time period.

2. The method according to claim 1, wherein obtaining historical photovoltaic active power values before a target time period and predicted photovoltaic active power values after the target time period on the basis of the filtering step size comprises:
determining, according to the filtering step size, a first number of historical photovoltaic active power values to be acquired and a second number of predicted photovoltaic active power values to be acquired, wherein a sum of the first number and the second number is equal to the filtering step size; and
obtaining the first number of photovoltaic active power values that are before and closest to the target time period as the historical photovoltaic active power values, and predicting the second number of photovoltaic active power values that are after and closest to the target time period as the predicted photovoltaic active power values.

3. The method according to claim 1, wherein determining a current energy storage power value for the target time period based on the historical photovoltaic active power values and the predicted photovoltaic active power values comprises:
determining a current value of a smoothed photovoltaic grid-connected power for the target time period based on the historical photovoltaic active power values and the predicted photovoltaic active power values; and
obtaining an original photovoltaic power value for the target time period, and obtaining the current energy storage power value for the target time period according to the current value of a smoothed photovoltaic grid-connected power for the target time period and the original photovoltaic power value.

4. The method according to claim 3, wherein the historical photovoltaic active power values and the predicted photovoltaic active power values each comprise a plurality of values.
determining a current value of a smoothed photovoltaic grid-connected power for the target time period based on the historical photovoltaic active power values and the predicted photovoltaic active power values comprises:
summing all of the plurality of the historical photovoltaic active power values and the predicted photovoltaic active power values to obtain a total power value; and
obtaining a ratio of the total power to the filtering step size as the current value of smoothed photovoltaic grid-connected power.

5. The power distribution method according to claim 3, wherein obtaining the current energy storage power value for the target time period according to the current value of a smoothed photovoltaic grid-connected power for the target time period and the original photovoltaic power value comprises:
calculating a difference between the current value of smoothed photovoltaic grid-connected power and the original photovoltaic power value to obtain the current energy storage power value for the target time period.

6. The power distribution method according to any one of claims 1 to 5, wherein the energy storage operation boundary conditions comprise an energy storage state-of-charge constraint condition and an energy storage power constraint condition;
the energy storage state-of-charge constraint condition is that the energy storage state-of-charge for a time period subsequent to the target time period is within a first preset range; and
the energy storage power constraint condition is that the energy storage power for the target time period is within a second preset range.

7. A power distribution apparatus for a photovoltaic energy storage system, **characterized in that** the apparatus comprises:
an initial determination module, configured to determine an initial filtering step size and a filtering step size increment for each iteration;
a power obtainment module, configured to obtain historical photovoltaic active power values before a target time period and predicted photovoltaic active power values after the target time period on the basis of the filtering step size, wherein the target time period is a time period during which photovoltaic fluctuation smoothing is performed;
an energy storage determination module, configured to determine a current energy storage power value for the target time period based on the historical photovoltaic active power values and the predicted photovoltaic active power values; and
a target determination module, configured to update the filtering step size based on the filtering step size increment to obtain a new filtering step size if the current energy storage power value does not exceed preset energy storage operation boundary conditions, return to the step of obtain historical photovoltaic active power values before a target time period and predicted photovoltaic active power values after the target time period on the basis of the filtering step size, until the determined current energy storage power value exceeds the energy storage operation boundary conditions, and end the cycle to obtain a target energy storage power value for the target time period.

8. A computer device comprising a memory and a processor, the memory storing a computer program, **characterized in that** the processor, when executing the computer program, implements the steps of the power distribution method for a photovoltaic energy storage system according to any one of claims 1 to 6.

9. A computer-readable storage medium having stored thereon a computer program, **characterized in that** the computer program, when executed by a processor, implements the steps of the power distribution method for a photovoltaic energy storage system according to any one of claims 1 to 6.

10. A computer program product comprising a computer program, **characterized in that** the computer program, when executed by a processor, implements the steps of the power distribution method for a photovoltaic energy storage system according to any one of claims 1 to 6.
